# EUROPÄISCHE PATENTSCHRIFT

(11) **EP 3 174 712 B1**
(45) Veröffentlichungstag und Bekanntmachung des Hinweises auf die Patenterteilung: **04.09.2024**
(21) Anmeldenummer: 15744897.8
(22) Anmeldetag: 24.07.2015
(51) Int. Cl.: B32B 27/12, B32B 3/26, B42D 13/00, B42D 25/00, B42D 25/333, B42D 25/346, B42D 25/355, B42D 25/378, B42D 25/455, B42D 25/46, B42D 25/47, B42D 25/36, B42D 25/328

(54) **MEHRSCHICHTAUFBAU UND VERFAHREN ZU DESSEN HERSTELLUNG FÜR EIN EINLAGEBLATT SOWIE EIN EINLAGEBLATT UND EIN VERFAHREN ZU DESSEN HERSTELLUNG UND EIN WERT- UND/ODER SICHERHEITSDOKUMENT**
MULTILAYER STRUCTURE FOR AN INSERT SHEET, VALUABLE AND/OR SECURITY DOCUMENT THEREFROM, AND METHODS FOR PRODUCING THE SAME
STRUCTURE MULTICOUCHE POUR FEUILLE D'INSERT, DOCUMENT DE VALEUR ET/OR DE SECURITÉ FABRIQUÉ À PARTIR DE CELLE-CI, ET LEUR PROCÉDÉS DE FABRICATION

(30) Priorität: 28.07.2014 DE 102014110582
(43) Veröffentlichungstag der Anmeldung: 07.06.2017
(73) Patentinhaber: Bundesdruckerei GmbH, 10969 Berlin (DE)
(72) Erfinder: SEIJO BOLLIN, Hans-Peter, 10245 Berlin (DE); SIEBERT, Martin, 10965 Berlin (DE); LESCHE, Ulrike, 13156 Berlin (DE); HENNIG, Marlen, 10367 Berlin (DE); MATHEA, Arthur, 14199 Berlin (DE); SPRINGMANN, Edward, 10249 Berlin (DE)
(74) Vertreter: Mammel und Maser Patentanwälte PartG mbB
(86) Internationale Anmeldenummer: PCT/EP2015/067009
(87) Internationale Veröffentlichungsnummer: WO 2016/016126

(56) Entgegenhaltungen:
- EP-A1- 2 487 029
- DE-A1- 102004 055 495
- DE-A1- 102012 016 329
- DE-A1- 102012 019 308
- JP-A- 2012 121 313
- US-A- 4 324 421
- US-B1- 6 482 495

## Beschreibung

Die Erfindung betrifft einen Mehrschichtaufbau für ein Einlageblatt sowie ein Verfahren zur Herstellung eines Mehrschichtaufbaus für ein solches Einlageblatt als auch ein Einlageblatt für ein vorzugsweise buchartiges Wert- und/oder Sicherheitsdokument und ein Verfahren zur Herstellung eines solchen Einlageblatts, vorzugsweise für ein buchartiges Wert- oder Sicherheitsdokument als auch ein Wert- und/oder Sicherheitsdokument.

Aus der DE 10 2006 037 383 A1 ist ein Verfahren zur Herstellung eines Mehrschichtaufbaus sowie ein Mehrschichtaufbau für ein Identifikationsdokument bekannt. Dieser Mehrschichtaufbau umfasst eine Substratschicht mit einem darin eingebrachten Transpondermodul. Des Weiteren weist die Substratschicht im Randbereich auf einer Ober- und Unterseite eine Anhäufung von einzelnen Fasern auf, welche in eine Klebemittelschicht eingebunden werden, um eine Deckschicht in der Substratschicht zu fixieren. Ein solcher Mehrschichtaufbau kann als Visasticker dienen. Ebenso kann dieser Mehrschichtaufbau auf eine Personalisierdatenseite aufgeklebt oder mit dieser verbunden werden, wobei dieser Verbund zusätzlich noch mit einer Deckschicht versehen wird.

Aus der WO 2006/079224 A1 ist ein Einlageblatt bekannt, welches eine Kernschicht aus einem textilen Gewebe aufweist, das auf jeweils einer Außenseite einen Datenträger zur Bildung eines Datenblatts umfasst. Die textile Schicht ragt über die Datenträger zur Bildung einer Lasche hinaus. In der textilen Schicht sind Durchbrüche vorhanden, so dass die einander gegenüber liegenden Datenträger durch Lamination sich durch die Durchbrüche erstrecken und unmittelbar miteinander verbunden sind.

Aus der DE 10 2012 016 329 A1 ist eine Gelenkfolie sowie ein Verfahren zur Herstellung einer Gelenkfolie bekannt. Diese Gelenkfolie umfasst eine Textilfolie, welche beidseitig mit einer thermoplastischen Kunststoffschicht durch Thermokompressionsverbinden beschichtet/verklebt ist.

Aus der EP 2 487 029 A1 ist eine Verbund- Gelenkschicht bekannt, welche eine Faserschicht aufweist, die vollständig mit einem geschmolzenen thermoplastischen Kunststoff gefüllt ist.

Aus der DE 10 2012 019 308 A1 ist des Weiteren ein Inlay für einen mehrschichtigen Träger bekannt, bei welchem ein Kunststoffmaterial Maschen eines Gewebes vollständig füllt, so dass das Inlay eine geschlossene profilierte Oberfläche aufweist.

Aus der US 6 482 495 B1 ist ein Verfahren zur Herstellung eines Mehrschichtaufbaus für ein Einlageblatt eines Wertdokumentes bekannt. Dieser Mehrschichtaufbau umfasst eine Faserschicht, in der ein IC-Chip und eine Antenne vorgesehen sind. Beidseitig zu der Faserschicht ist eine Deckschicht vorgesehen, welche durch Lamination mit der Faserschicht verbunden sind.

Aus der DE 10 2004 055 495 A1 ist eine Personalisierungsseite für ein Wertdokument bekannt. Diese Personalisierungsseite besteht aus einer textilen Schicht als eine Kernlage, die beidseitig mit einer thermoplastischen Kunststoffschicht verbunden ist, welche die Kernlage bis auf einen Überstand abdeckt, wobei die Personalisierungsseite im Bereich des Überstandes mittels einer Naht mit dem Wertdokument vernäht ist.

Aus der US 4 324 421 A ist eine Identitätskarte, wie beispielsweise eine Kreditkarte, bekannt. Diese Identitätskarte umfasst eine Kernschicht aus einem Material, wie beispielsweise ein Papierfilz, in welchem Fasern eingebracht sind. Diese Kernschicht ist in zwei Schichten unterteilt, wobei dazwischenliegend eine Versteifungsschicht vorgesehen ist. Jeweils an der Außenseite der Kernschicht ist ein transparenter Polyethylen-Film vorgesehen und mit der Kernschicht durch Lamination verbunden. Der Erfindung liegt die Aufgabe zugrunde, einen Mehrschichtaufbau für ein Einlageblatt sowie ein Verfahren zu dessen Herstellung zu schaffen, welches eine erhöhte Bruchfestigkeit und bessere Reißfestigkeit bei weiterhin guter Bedruckbarkeit aufweist. Des Weiteren liegt der Erfindung die Aufgabe zugrunde, ein Einlageblatt sowie ein Verfahren zu dessen Herstellung vorzuschlagen, bei welchem eine Spaltbarkeit oder Abschälen einzelner Schichten und somit Manipulationen erschwert sind sowie eine hohe Bruchfestigkeit, gute Reißfestigkeit und gegebenenfalls weiterhin gute Bedruckbarkeit gegeben sind. Des Weiteren liegt der Erfindung die Aufgabe zugrunde, ein Wert- und/oder Sicherheitselement zu schaffen.

Diese Aufgabe wird durch einen Mehrschichtaufbau für ein Einlageblatt gelöst, welcher zumindest eine Kernlage aus einer Faserverbundschicht und zumindest eine auf zumindest einer Seite der Faserverbundschicht aufgebrachte Schicht aus einem thermoplastischen Polymer umfasst, wobei im Überlappungsbereich der zumindest einen Schicht zur Faserverbundschicht die zumindest eine Schicht bezogen auf deren Dicke in die Faserverbundschicht zumindest teilweise einpenetriert ist. Dadurch wird ein inniger und zusammenhängender Aufbau zwischen der zumindest einen Schicht aus einem thermoplastischen Polymer und der Faserverbundschicht geschaffen, welche eine Kernlage für ein Einlageblatt bilden können. Durch das Einpenetrieren der zumindest einen Schicht aus thermoplastischem Polymer in die Faserverbundschicht erfolgt die Schaffung einer Penetrierzone, in welcher Teile der aus thermoplastischem Polymer bestehenden Schicht und der Faserverbundschicht einen gemeinsamen Schichtverbund bilden, der nicht mehr trennbar ist. Bei einer versuchten Manipulation an dem Mehrschichtaufbau werden dieser Verbund zerstört und solche Manipulationen sichtbar.

Der Mehrschichtaufbau für das Einlageblatt weist eine Penetrationszone auf, bei der die zumindest eine, einseitig aufgebrachte Schicht in die Faserverbundschicht zu wenigstens 70 % einpenetriert ist. Dadurch gehen die zumindest zwei Schichten fast vollständig ineinander auf, so dass nur eine dünne, die Faserverbundschicht abdeckende Zone aus thermoplastischem Polymer frei von Faserverbundmaterial bleibt, um diese Oberfläche der Faserverbundschicht zu schließen. Auf die zumindest eine Seite der Faserverbundschicht ist ein Sicherheitsmerkmal aufgebracht, in welches die zumindest eine Schicht unter Einbindung des Sicherheitsmerkmals einpenetriert ist.

Bevorzugt ist vorgesehen, dass die Faserverbundschicht, auf welche einseitig die zumindest eine Schicht aus thermoplastischem Polymer aufgebracht ist, die Faserverbundschicht vollständig überdeckt. Dadurch kann einerseits eine vollflächige Penetrationszone zwischen der Faserverbundschicht und der darauf aufgebrachten zumindest einen Schicht gegeben sein und andererseits die gegenüber liegende Oberfläche der Faserverbundschicht vorteilhafterweise unmittelbar drucktechnisch behandelbar bleiben.

Der Mehrschichtaufbau kann gemäß einer Ausführungsform auf der Faserverbundschicht zumindest ein Sicherheitsmerkmal, insbesondere ein Druckbild, aufweisen, welches durch die zumindest eine Schicht vollflächig überdeckt ist, um eine Datenseite zu bilden, wobei sich über das Datenblatt hinaus zur Bildung der Lasche nur die Faserverbundschicht, nur die zumindest eine Schicht oder die Faserverbundschicht und die zumindest eine Schicht erstrecken kann. In Abhängigkeit der Anwendungsfälle kann die Lasche wahlweise ausgebildet werden.

Eine Ausführungsform des Mehrschichtaufbaus sieht vor, dass in die Faserverbundschicht beidseitig zumindest eine Schicht aus einem thermoplastischen Polymer einpenetriert ist, wobei von jeder Seite aus zumindest eine Schicht sich innerhalb der Faserverbundschicht stoffschlüssig verbindet. Dadurch wird ein Aufspalten der Faserverbundschicht oder Abschälen einer Oberseite oder einer Unterseite verhindert. Des Weiteren kann bevorzugt zumindest eine äußere Zone der zumindest einen Schicht frei von Faserverbundmaterial als Außenschicht verbleiben.

Eine alternative Ausführungsform des Mehrschichtaufbaus sieht vor, dass in eine Schicht aus thermoplastischem Polymer beidseitig jeweils eine Faserverbundschicht einpenetriert ist, so dass die Penetrationszonen der Faserverbundschichten sich in Richtung oder bis zu einer Mittelebene der Schicht erstrecken oder sogar aneinander angrenzen.

Die Faserverbundschicht kann aus einer zufälligen oder ungeordneten Anordnung von Fasern bestehen, wie beispielsweise einem flächigen Faserbündel, einem Fasernetzwerk, einer flächigen Faseranordnung aus Natur- und/oder Kunstfasern oder Viskose, insbesondere einem Vlies, einem Filz, einem Wirrfasersubstrat, einem Gelege oder einem Papier.

Die zumindest eine Schicht aus thermoplastischem Elastomer kann aus thermoplastischem Polyurethan, einer Mischung mit überwiegenden Bestandteilen aus thermoplatischem Polyurethan oder Thermoplasten, vorzugsweise Polycarbonat, Polypropylen, Polyester, Polyethylen, Polyamid, Polyvinylchlorid, Polyethylenterephthalat, PET-G, ABS oder einer Mischung davon, ausgewählt sein.

Bevorzugt bestehen die Fasern der Faserverbundschicht aus einem thermoplastischen Polymer, insbesondere aus Polyamid, Polypropylen, Polyethylenterephthalat, PET-G oder aus einer Mischung mit Naturfasern, insbesondere auf Basis der Cellulose, Baumwolle oder dergleichen. Vorteilhafterweise können bei der Faserverbundschicht, welche auf Basis von Kunststofffasern aufgebaut ist, Naturfaseranteile bis zu 50 % beigemischt werden.

Die Faserverbundschicht kann ein Bindemittel zu dessen Fixierung beinhalten. Ein solches Bindemittel kann beispielsweise aus Polyvinylacetat, Vinylacetat-Copolymer, PUR, Polyacrylat, Polystyrol, Methylcellulose, Acrylnitril oder Mischungen daraus bestehen.

Die Fasern der Faserverbundschicht sind durch Verschlingen, Verweben, Vernadeln oder dergleichen zueinander fixiert und vorzugsweise mit einem Binde- oder Lösemittel zueinander verfestigt.

Des Weiteren ist bevorzugt zumindest eine Seite der Faserverbundschicht bedruckbar, wobei vorzugsweise eine Datenseite der Faserverbundschicht mit einem Strich vorbehandelt ist.

Die Faserverbundschicht zur Bildung der Kernlage weist zumindest ein Sicherheitsmerkmal, insbesondere ein Wasserzeichen, einen Sicherheitsfaden, chemische Reagenzien, eine oder mehrere Substanzen oder Materialien aus der Gruppe bestehend aus Farbpigmenten, Effektpigmenten, optisch variablen Pigmenten und/oder Lumineszenzsubstanzen oder -pigmenten oder Fluoreszenzsubstanzen oder -pigmenten, Durchbrüche oder Perforationen auf.

Die der Erfindung zugrunde liegende Aufgabe wird des Weiteren durch ein Verfahren zur Herstellung des vorbeschriebenen Mehrschichtaufbaus für ein Einlageblatt, gemäß den Merkmalen des Anspruchs 8 gelöst. Dadurch kann ein unlösbarer Verbund zwischen den beiden Schichten geschaffen werden. Dadurch kann auch ein Einlageblatt für eine dezentrale Personalisierung geschaffen werden.

Die Dicke der Faserverbundschicht und die Dicke der zumindest einen Schicht aus thermoplastischem Polymer ist derart ausgewählt, dass die zumindest eine, einseitig aufgebrachte Schicht zu wenigstens 70 % in die Faserverbundschicht beziehungsweise wenigstens 70 % des Volumens der zumindest einen Schicht einpenetriert wird. Dadurch sind die zumindest zwei Schichten bezüglich deren wesentlicher Dickenbereiche ineinander greifend vorgesehen, die eine Manipulation durch Abschälen oder Auftrennen erheblich erschweren.

Bevorzugt ist wird beidseitig zur Faserverbundschicht zumindest eine Schicht einpenetriert, und die Schichten innerhalb der Faserverbundschicht werden stoffschlüssig miteinander verbunden. Dadurch kann eine unlösbare Matrix aus der Faserverbundschicht und der zumindest einen Schicht aus thermoplastischem Polymer gebildet werden, die unlösbar miteinander verbunden sind und eine dauerhafte Verbindung mit einer erhöhten Bruchfestigkeit und verbesserten Reißfestigkeit ermöglichen.

Des Weiteren ist auf einer oder beiden Seiten der Faserverbundschicht zumindest ein Sicherheitsmerkmal, insbesondere Druckbild, aufgebracht, und anschließend wird die zumindest eine Schicht unter Einbindung des Sicherheitsmerkmals auf die zumindest eine Seite der Faserverbundschicht einpenetriert. Ein Abschälen der zumindest einen Schicht von der Faserverbundschicht zum anschließenden Austausch oder Veränderung des Druckbildes ist aufgrund des Einpenetrierens nicht möglich, da eine Trennebene zwischen den beiden Schichten nicht mehr gegeben ist.

Des Weiteren kann bevorzugt zur besseren Bedruckbarkeit der Faserverbundschicht ein- oder beidseitig ein Strich darauf aufgebracht werden. Dieser Strich besteht aus saugfähigen mineralischen Füllstoffen, beispielsweise Kaolin, Calciumcarbonat, Titandioxid oder dergleichen und kann zusätzlich ein Bindemittel umfassen, wie beispielsweise Kasein.

Zum Herstellen der Penetrationszone beziehungsweise zum Einpenetrieren der zumindest einen Schicht in die Faserverbundschicht oder umgekehrt werden die Schichten als Bahnware zwischen einem Rollenpaar hindurch geführt oder getaktet über eine flächige Heizpresse geführt oder einzelne Bögen der Schichten in einer Stapelpresse, vorzugsweise einer beheizbaren Stapelpresse, optional mit Vakuumunterstützung, eingebracht und somit unlösbar miteinander verbunden.

Die der Erfindung zugrunde liegende Aufgabe wird des Weiteren durch ein Einlageblatt für ein vorzugsweise buchartiges Wert- oder Sicherheitsdokument mit einem Datenblatt und einer Lasche gelöst, bei dem das Einlageblatt zumindest eine Ausführungsform des vorbeschriebenen Mehrschichtaufbaus aufweist und auf einer Seite der Faserverbundschicht, welche frei von einer einpenetrierten Schicht aus thermischem Polymer ist, mit Daten, Informationen und/oder zumindest einem Sicherheitsmerkmal bedruckbar ist. Durch den Mehrschichtaufbau lässt sich in einfacher Weise ein Einlageblatt herstellen und mit Daten versehen oder aus dem Mehrschichtaufbau ein Personalisierdatenblatt als Einlageblatt bilden, indem die nutzerbezogenen Informationen und Daten bedruckt werden. Diese Fertigstellung des Einlageblattes kann sowohl vor dem Einbinden des Einlageblattes in ein Wert- und/oder Sicherheitsdokument als auch nach dem Einbinden in das Wert- und/oder Sicherheitsdokument erfolgen.

Bevorzugt wird auf die bedruckte Seite der Faserverbundschicht zumindest eine Schutzfolie aufgebracht. Dadurch kann ein nachträgliches Überdrucken verhindert werden. Eine solche Ausführungsform ermöglicht beispielsweise eine dezentrale Personalisierung eines Wert -oder Sicherheitsdokumentes. Das Bedrucken und anschließende Aufbringen der Schutzfolie kann dezentral erfolgen. Die Schutzfolie kann hierzu eine Klebemittelschicht aufweisen. Ebenso kann in einer dezentralen Laminierstation durch Einwirkung eines Druckbildes und/oder Temperatur diese Schutzfolie mit der Faserverbundschicht verbunden werden. Die auf die bedruckte Seite der Faserverbundschicht aufgebrachte Schutzfolie erstreckt sich vorteilhafterweise über das gesamte Datenblatt, ohne sich in die Lasche hinein zu erstrecken.

Eine weitere bevorzugte Ausführungsform des Einlageblattes sieht vor, dass auf die zumindest eine Schicht oder Schichten, welche ein- oder beidseitig in die Faserverbundschicht einpenetriert ist oder sind, zumindest eine Folie oder eine weitere Schicht mit einem Sicherheitsmerkmal mit einer Klebemittelschicht verbunden ist, wobei die Klebemittelschicht klebemittelfreie Bereiche oder Bereiche mit einem Trennmittel als Sollbruchstelle umfasst. Dadurch können Sollbruchstellen geschaffen werden, um die weitere darauf aufgebrachte Schicht mit zumindest einem Sicherheitsmerkmal vor dem unbefugten Ablösen zu sichern. Analoges gilt für die Ausführungsform des Mehrschichtaufbaus für ein Einlageblatt, bei welchem in die zumindest eine Schicht jeweils beidseitig eine Faserverbundschicht einpenetriert und eine gegenüber liegende Außenseite der Faserverbundschicht zur Aufnahme der Klebemittelschicht vorgesehen ist, um die zumindest eine Folie oder eine weitere Schicht in einem Sicherheitsmerkmal dazu zu fixieren. Bei dieser Ausführungsform können ebenfalls in analoger Weise die Sollbruchstellen vorgesehen sein.

Eine weitere bevorzugte Ausführungsform des Einlageblattes sieht vor, dass die zumindest eine Schicht, welche in die Faserverbundschicht einpenetriert ist, eine strukturierte Lackschicht aufweist, auf welche die zumindest eine weitere Schicht mit einem Sicherheitsmerkmal mittels einer Klebemittelschicht aufgebracht wird. Dadurch kann wiederum eine Sollbruchstelle geschaffen werden.

Bevorzugt umfasst die zumindest eine weitere Schicht mit Sicherheitsmerkmalen holographische Sicherheitsmerkmale.

Die der Erfindung zugrunde liegende Aufgabe wird des Weiteren durch ein Verfahren zur Herstellung eines Einlageblattes für ein vorzugsweise buchartiges Wert- und/oder Sicherheitsdokument gelöst, bei welchem ein Mehrschichtaufbau gemäß einer der vorstehend beschriebenen Ausführungsformen bedruckt wird. Das Einlageblatt ist durch den Mehrschichtaufbau derart auf- und vorbereitet, dass zur Fertigstellung des Einlageblattes ein Aufdrucken eines Datenblatts, einer Titelseite und/oder eines Sicherheitsdruckes genügt.

Gemäß einer ersten Ausführungsform wird die bedruckte Oberfläche der Faserverbundschicht mit einer Schutzfolie abgedeckt. Diese Schicht kann zumindest als eine Folie oder eine Beschichtung, wie beispielsweise ein Lack, ausgebildet sein. Die darauf aufgebrachte Schutzfolie kann beispielsweise aus PET-G oder Polycarbonat bestehen.

Eine weitere vorteilhafte Ausgestaltung des Verfahrens sieht vor, dass auf die zumindest eine Schicht, welche in die Faserverbundschicht einpenetriert ist oder auf die Faserverbundschicht eine Klebemittelschicht mit einem Sicherheitsmerkmal, insbesondere einem holographischen Sicherheitsmerkmal, aufgebracht werden.

Die Erfindung betrifft des Weiteren ein Wert- und/oder Sicherheitsdokument mit zumindest einem Einlageblatt, welches aus einem Mehrschichtaufbau gemäß einer der vorstehenden Ausführungsformen hergestellt ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figuren 1a und 1b eine schematische Schnittansicht und eine schematische Draufsicht auf einen Mehrschichtaufbau für ein Einlageblatt,
Figur 2 eine schematische Schnittansicht einer alternativen Ausführungsform zu Figur 1,
Figur 3 eine weitere alternative Ausführungsform zu Figur 1,
Figur 4 eine schematische Schnittdarstellung eines Einlageblattes für ein Sicherheitsdokument mit einem Mehrschichtaufbau gemäß Figur 2,
Figur 5 eine schematische Schnittansicht einer alternativen Ausführungsform eines Einlageblattes mit einem alternativen Mehrschichtaufbau zu Figur 4,
Figuren 6a und 6b eine schematische Draufsicht und Schnittansicht einer alternativen Ausführungsform eines Mehrschichtaufbaus zu Figur 1,
Figur 7 eine schematische Schnittansicht einer alternativen Ausführungsform zu den Figuren 6a und 6b und
Figur 8 eine schematische Schnittansicht eines Einlageblattes mit einem Mehrschichtaufbau gemäß den Figuren 6a und 6b.

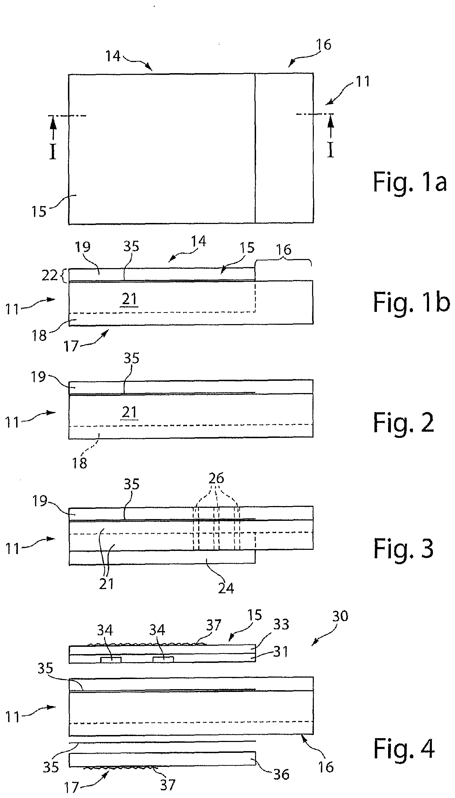

In Figur 1a ist eine schematische Ansicht auf einen Mehrschichtaufbau 11 dargestellt. Eine Schnittdarstellung entlang der Linie I-I in Figur 1a des Mehrschichtaufbaus 11 ist in Figur 1b dargestellt. Ein solcher Mehrschichtaufbau 11 kann insbesondere bei der Herstellung von Wert- und/oder Sicherheitsdokumenten, wie beispielsweise einem Reisepass oder dergleichen, Einsatz finden. Vorzugsweise wird ein solcher Mehrschichtaufbau 11 als Vor- oder Zwischenprodukt zur Herstellung eines Einlageblattes 30 verwendet, welches beispielsweise nachfolgend in den Figuren 4, 5 und 8 beschrieben wird.

Der Mehrschichtaufbau 11 umfasst einen Bereich zu Bildung eines Datenblatts 14 und einen Bereich zur Bildung einer Lasche 16, wobei durch die Bezugsziffern die Bereiche gekennzeichnet sind, welche bei der späteren Bildung eines Einlageblattes 30 das Datenblatt 14 mit einer Titelseite 15 und Datenseite 17 und die Lasche 16 bilden sollen. Unter Datenseite" wird eine Seite des Datenblatts 14 verstanden, auf welcher personenbezogene Informationen und Daten aufgebracht sind, wie beispielsweise ein Portrait, Foto oder Name des Dokumenteninhabers. Die der Datenseite 17 gegenüber liegende Seite, die Titelseite 15, weist beispielsweise Hoheitszeichen, weitere Sicherheitsmerkmale und/oder Sekundärbilder auf.

Der Mehrschichtaufbau 11 kann auch nur eine Datenseite 14 zur Bildung eines Wert- und/oder Sicherheitsdokumentes umfassen.

Der Mehrschichtaufbau 11 besteht zumindest aus einer Faserverbundschicht 18 und zumindest einer darauf angeordneten Schicht 19 aus thermoplastischem Polymer. Die Faserverbundschicht 18 erstreckt sich über das Datenblatt 14 und die Lasche 16. Auf diese Faserverbundschicht 18 wird zumindest eine erste Schicht 19 aufgebracht, welche sich beispielsweise gemäß Figur 1b nur entlang des Bereiches des Datenblatts 14 erstreckt.

Die Faserverbundschicht 18 kann aus einer Faserschicht aus einer zufälligen Anordnung von Fasern bestehen, wie beispielsweise einem flächigen Faserbündel, einem Fasernetzwerk oder einer flächigen Faseranordnung, insbesondere einem Vlies, einem Gelege, einem Wirrfasersubstrat oder einem Filz. Des Weiteren kann die Faserverbundschicht aus Papierfasern und/oder Cellulosefasern bestehen.

Die Faserverbundschicht 18 kann aus reinen Naturfasern oder reinen Kunstfasern oder einer Kombination beziehungsweise aus einer Mischung aus Natur- und Kunststofffasern oder aus Viskose ausgebildet sein. Die Faserverbundschichten 18 sind vorzugsweise bedruckbar.

Bevorzugt ist die Faserverbundschicht 18 auf der Basis von PET oder PET-G aufgebaut und liegt in Form eines Gewirkes, Geleges oder eines Vlieses zur Bildung von Kunststoffpapier vor. Solche Gewirke, Gelege, Vliese umfassen Faserlängen von wenigstens 5 mm, vorzugsweise länger als 1 cm, und können durch sogenannte Endlosfasern gebildet werden. Ebenso können solche Gewirke, Gewebe oder Vliese auch aus Viskose eingesetzt werden. Solche Kunstfaserschichten 18 weisen bevorzugt bei wenigstens 40 % des Kunstfaseranteils eine Faserlänge von 10 mm oder mehr auf. Bevorzugt sind mindestens 80 % des Kunstfaseranteils in der Faserverbundschicht 18 zwischen einer Faserlänge von 10 bis 50 mm ausgebildet.

Bevorzugt werden Faserverbundschichten 18 mit einem Flächengewicht von 60 bis 230 g/m², vorzugsweise 80 bis 180 g/m², eingesetzt. Diese können eine Porosität beziehungsweise Luftdurchlässigkeit, insbesondere in einem Bereich zwischen 10 bis 200 l/m²s, aufweisen.

Die zumindest eine Schicht 19, 24 aus einem thermoplastischen Polymer beziehungsweise zumindest einer Folie, welche die Schicht 19, 24 bildet, die auch mehrere Lagen umfassen kann, besteht vorzugsweise aus einem organischen Polymerwerkstoff. Dieser organische Polymerwerkstoff kann ausgewählt werden aus einer Gruppe bestehend aus PC (Polycarbonat, insbesondere Bisphenol A Polycarbonat), PET (Polyethylenglykolterephthalat), PET-G (Polyethylenterephthalat Glykol Copolyester), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid), Polystyrol, Polyacrylate und Methacrylate, Vinylester, ABS und Copolymere solcher Polymere, Cycloolefin-Copolymere, Polysulfone, Polyester, PET, PEN, Polycarbonat/Polyester-Blends, zum Beispiel PC/CoPET, Polycarbonat/Polycyclohexylmethanol-cyclohexandicarboxylat, insbesondere Polycarbonate oder Copolycarbonate auf Basis von Diphenolen, Poly- oder Copolyacrylate, Poly- oder Copolymethacrylate, Poly- oder Copolymere mit Styrol, thermoplastische Polyurethane, Polyolefine, Poly- oder Copolykondensate der Terephthalsäure oder Naphthalindicarbonsäure oder Mischungen aus diesen, besonders bevorzugt Polycarbonate oder Copolycarbonate auf Basis von Diphenolen, Poly- oder Copolyacrylate, Poly- oder Copolymethacrylate, Poly- oder Copolykondensate der Terephthalsäure oder Naphthalindicarbonsäure oder Mischungen aus diesen.

Vor dem Zusammenführen und Verbinden der Faserverbundschicht 18 und der zumindest einen Schicht 19 kann auf die Faserverbundschicht 18 ein Bedrucken mit einem Druckbild 35 erfolgen. Beispielsweise können ein Datenblatt, vorzugsweise mit einem Sicherheitsdruck, und/oder weitere Sicherheitsmerkmale aufgebracht werden.

Des Weiteren kann vor dem Zusammenführen und Verbinden der Faserverbundschicht 18 und der zumindest einen Schicht 19 ein Transpondermodul mit einem IC-Chip und einer Antenne auf die Faserverbundschicht 18 aufgebracht werden. Der IC-Chip kann zumindest teilweise in die Faserverbundschicht 18 eingebettet sein. Die Antenne wird bevorzugt mittels eines drucktechnischen Verfahrens auf die Faserverbundschicht 18 aufgebracht. Zusammen mit einem Druckbild bestehend aus Personalisierungsdaten und/oder einem Foto oder dergleichen auf der Faserverbundschicht 18 kann eine Datenseite für ein Datenblatt eines Wert- und/oder Sicherheitsdokumentes erzielt werden.

Diese zumindest eine Schicht 19 wird unter Temperatur erweicht und unter Druck und/oder Temperatur mit der Faserverbundschicht 18 zusammen geführt, so dass diese Schicht 19 über deren gesamte, die Faserverbundschicht 18 überdeckende Fläche in die Faserverbundschicht 18 einpenetriert wird und eine Penetrierzone 21 ausbildet. Dabei ist vorgesehen, dass sich diese Penetrierzone 21 annähernd bis zur gegenüber liegenden Seite der Faserverbundschicht 18 erstreckt, jedoch an der gegenüber liegenden Seite nicht heraustritt. Wenigstens werden 70 % der Schicht 19 in die Faserverbundschicht 18 einpenetriert. Die Penetrierzone 21 kann eine gleichbleibende Dicke umfassen. Alternativ können auch unterschiedlich stark ausgebildete Penetrierzonen vorgesehen sein. Alternativ kann sich die Schicht 19 auch nur teilweise oder abschnittsweise innerhalb der Datenseite 14 erstrecken und diese überlappen.

Die zumindest eine äußere Schicht 19 weist bevorzugt nach der Phase der Einpenetrierung eine Zone 22 auf, welche frei von einer Faserverbundschicht 18 ist, so dass eine geschlossene und ungestörte Oberfläche durch die zumindest eine Schicht 19 ausgebildet ist. Die Penetrierzone 21 erstreckt sich nahezu bis zur gegenüber liegenden Oberfläche der Faserverbundschicht 18, von welcher aus die Schicht 19 einpenetriert ist. Bei diesem Ausführungsbeispiel bleibt die Lasche 16 frei von der zumindest einen Schicht 19, das heißt, dass die Lasche 16 ausschließlich aus der Faserverbundschicht 18 gebildet ist.

Die Lamination der zumindest einen Schicht 19 zur Faserverbundschicht 18 kann in einem oder mehreren Schritten erfolgen, die auch in Abhängigkeit der aufzubringenden Schichten bestehen.

Beispielsweise kann eine Schicht 19 aus Polycarbonat unmittelbar in die Faserverbundschicht 18 einlaminiert werden. Alternativ kann vorgesehen sein, dass zunächst eine Schicht aus PET-G, beispielsweise mit einer Schichtdicke von 100 µm, mit der Faserverbundschicht 18 laminiert und anschließend auf die zuerst einlaminierte Schicht aus PET-G eine Schicht aus Polycarbonat auflaminiert wird. Bei einem solchen Aufbau kann alternativ anstelle einer zweistufigen Lamination auch eine einstufige Lamination erfolgen, indem die Schicht aus PET-G in die Schicht aus Polycarbonat in einem Schritt mit der Faserverbundschicht 18 laminiert wird. Analoges gilt für die nachfolgend noch beschriebenen Ausführungsformen, bei welchen beidseitig zur Faserschicht die zumindest eine Schicht 19, 24 aufgebracht ist.

Die Lamination der zumindest einen Schicht 19, 24 mit der Faserverbundschicht erfolgt bevorzugt bei 120 bis 200 °C. Bei der Verwendung von einem Material von PET-G, ABS oder dergleichen wird vorzugsweise eine Temperatur von 130 bis 160 °C eingestellt. Bei der Lamination von einer Schicht aus Polycarbonat beziehungsweise einem Schichtenverbund aus Polycarbonat und PET-G werden vorzugsweise Temperaturen von 160 bis 190 °C für den Laminationsprozess eingestellt. Der Pressdruck liegt bei einer Chargenlamination in Etagenpressen, vorzugsweise bei 2 bis 10 bar. Bei einer getakteten Lamination liegt der Pressdruck insbesondere bei 20 bis 100 bar.

In Figur 2 ist eine alternative Ausführungsform des Mehrschichtaufbaus 11 zu Figur 1b dargestellt. Diese Ausführungsform weicht von der in den Figuren 1a und 1b dahingehend ab, dass sich die zumindest eine Schicht 19 sowohl über das Datenblatt 14 als auch über die Lasche 16 erstreckt, so dass die flächige Erstreckung der Faserverbundschicht 18 und der zumindest einen Schicht 19 deckungsgleich ist.

In Figur 3 ist eine weitere alternative Ausführungsform des Mehrschichtaufbaus 11 zu den Figuren 1a, 1b und 2 dargestellt. Diese Ausführungsform kann auf einer gegenüber liegenden Seite zur zumindest einen einpenetrierten Schicht 19 an der Faserverbundschicht 18 zumindest eine weitere Schicht 24 vorgesehen sein, welche ebenfalls in die Faserverbundschicht 18 einpenetriert wird. Die Penetrierzone 21 der zumindest einen Schicht 19 und die Penetrierzone 21 der zumindest einen weiteren Schicht 24 können sich jeweils bis zu einem mittleren Bereich der Faserverbundschicht 18 erstrecken und sich stoffschlüssig miteinander verbinden. Dabei können beide Schichten 19, 24 gleichzeitig einpenetriert werden. Alternativ können diese in zwei aufeinander folgenden Verfahrensschritten einpenetriert werden.

Die Schicht 24 erstreckt sich bevorzugt nur über den Bereich des Datenblatts 14. Alternativ kann sich diese auch entlang der Lasche 16 erstrecken. Des Weiteren können sich sowohl die Schicht 19 als auch die Schicht 24 nur bis zur Lasche erstrecken, so dass die Lasche 16 durch die Faserverbundschicht 18 gebildet ist. Die Faserverbundschicht 18 kann in diesem Bereich durch Löse- oder Bindemittel gefüllt sein, so dass die Lasche 16 einerseits flexibel und andererseits eine hinreichende Reißfestigkeit nach dem Einbringen in ein buchartiges Wertdokument, insbesondere durch Einnähen, gegeben ist.

Die Faserverbundschicht 18 kann Durchbrüche 26 aufweisen, in welche die zumindest eine Schicht 19 hinein fließen kann, so dass das thermoplastische Polymer durch die Durchbrüche 26 hindurch bis zur gegenüber liegenden Seite gelangen kann. Beim Aufbringen der zumindest einen weiteren Schicht 24 kann dabei eine Verbindung oder Verankerung der Schichten 19 und 24 geschaffen werden, wobei solche thermoplastischen Polymere ausgewählt werden, welche sich miteinander verbinden, um solche Verankerungsstellen über die Durchbrüche 26 zwischen den beiden Schichten 19, 24 zu bilden.

Vor dem Aufbringen der weiteren Schicht 24 kann die freie Oberfläche der Faserverbundschicht 18 bedruckt werden. Insbesondere kann ein Druckbild 35 einer Datenseite 17, vorzugsweise mit einem Sicherheitsdruck, vorgesehen sein.

In Figur 4 ist eine schematische Schnittdarstellung eines Einlageblattes 30 dargestellt, welches aus einem Mehrschichtaufbau 11 gemäß der Ausführungsform in Figur 2 und mittels einer Klebemittelschicht zumindest eine weitere Schicht 33 zur zumindest einen Schicht 19 anordnet. Diese weitere Schicht 33 kann ein oder mehrere Sicherheitsmerkmale, insbesondere holographische Sicherheitsmerkmale, umfassen.

In der Klebemittelschicht 31 können Bereiche mit Trennmitteln 34 vorgesehen sein, welche Sollbruchstellen bilden können. Auf der gegenüber liegenden Seite der Faserverbundschicht 18 können ein Druckbild 35, Daten und/oder Sicherheitsmerkmale aufgedruckt werden, welche anschließend durch eine an der Faserverbundschicht 18 anhaftende Schutzfolie 36 abgedeckt sind. Ergänzend kann auf der Außenseite der Schutzfolie 36 und/oder auf der Außenseite der weiteren Schicht 33 eine strukturierte Lackschicht 37 aufgebracht sein.

Das Ausführungsbeispiel gemäß Figur 4 zeigt, dass ausgehend von einem Mehrschichtaufbau 11 ein Einlageblatt 30, insbesondere ein personalisiertes Einlageblatt, nachträglich erstellt werden kann. Ein solches Einlageblatt 30 kann einzeln oder in eingebundener Form in einem Wert- oder Sicherheitsdokument vorliegen, um auf der Datenseite 17 der Faserverbundschicht 18 mit dem Druckbild 35 bedruckt und anschließend mit einer Schutzfolie 36 geschützt und abgedeckt zu werden. Bei dem Druckbild 35 kann es sich sowohl um Muster, Geometrien, Bilder, Portraits als auch um personen- oder zugehörigkeitsbezogene Daten und Informationen handeln. Auf der gegenüber liegenden Seite kann eine weitere Schicht 33, insbesondere mit Sicherheitsmerkmalen, aufgebracht werden, welche vorzugsweise ebenso Personalisierdaten umfassen kann, die zumindest teilweise dem aufgebrachten Druckbild 35auf der Datenseite 17 entsprechen.

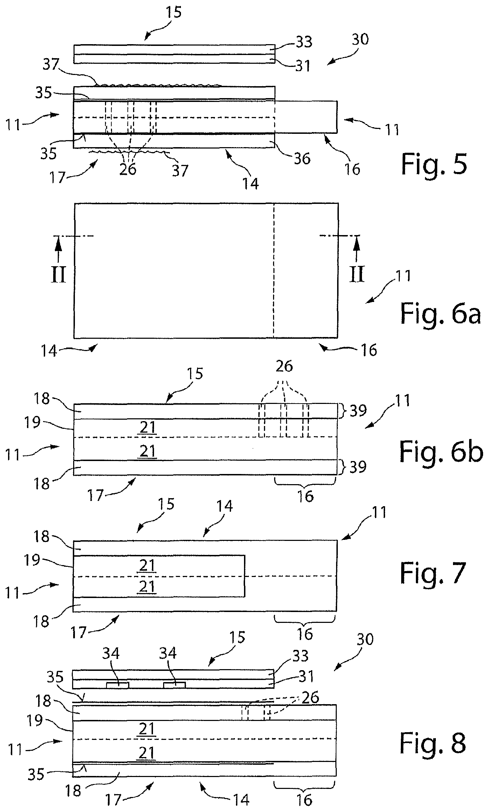

In Figur 5 ist eine weitere alternative Ausführungsform eines Einlageblattes 30 dargestellt. Bei dieser Ausführungsform wird von einem Mehrschichtaufbau 11 gemäß den Figuren 1a und 1b ausgegangen, wobei dieser Mehrschichtaufbau 11 zusätzlich Durchbrüche 26 umfassen kann. Auf die zumindest eine Schicht 19 kann beispielsweise eine strukturierte Lackschicht 37 aufgebracht werden, bevor in Analogie zu Figur 4 eine Klebemittelschicht 31 mit einer weiteren Schicht 33 zur Schicht 19 verbunden wird. Gegenüber liegend können ein Druckbild 35 sowie die Schutzfolie 36 und optional eine strukturierte Lackschicht 37 aufgebracht sein. Diese Ausführungsform weicht im Hinblick auf die Lasche zur Figur 4 dahingehend ab, dass wiederum ausschließlich die Faserverbundschicht 18 die Lasche 16 bildet. Alternativ kann auch vorgesehen sein, dass die Schicht 19 und Schicht 36 sich in die Lasche 16 hinein erstrecken und vollständig die Faserverbundschicht 18 überdecken und gegebenenfalls sogar darüber hinaus einhüllen.

Die Faserverbundschicht 18 weist beispielsweise im Ausgangszustand eine Schichtdicke von 50 bis 200 µm auf. Die zumindest eine Schicht 19 kann eine Schichtstärke von 50 bis 200 µm aufweisen. Durch das Einpenetrieren der zumindest einen Schicht 19 mit mehr als 70 %, vorzugsweise mehr als 80 %, kann ein Mehrschichtaufbau 11 geschaffen werden, der nur geringfügig dicker als die Ausgangsdicke der Faserverbundschicht 18 ist.

In Figur 6a ist eine schematische Draufsicht auf eine alternative Ausführungsform eines Mehrschichtaufbaus 11 und in Figur 6b eine Schnittansicht entlang der Linie II-II in Figur 6a dargestellt. Diese Ausführungsform weicht von dem vorstehenden Prinzip des Mehrschichtaufbaus 11 gemäß den Figuren 1 bis 5 dahingehend ab, dass zumindest eine zentrale Schicht 19 vorgesehen ist, welcher beidseitig jeweils eine Faserverbundschicht 18 zugeordnet ist, so dass die Schicht 19 beidseitig in die jeweils daran angrenzenden Faserverbundschichten 18 einpenetrieren sowie eine Penetrierzone 21 bilden beziehungsweise die Faserverbundschichten 18 in die Schicht 19 einpenetrieren. Dabei können jeweils an den Außenseiten der Faserverbundschichten 18 Zonen 39 gebildet werden, welche frei von einem thermoplastischen Polymer der zentralen Schicht 19 sind. Zusätzlich können in einer oder beiden der Faserschichten 18 Durchbrüche 26 vorgesehen sein, so dass sich das thermoplastische Polymer der zumindest einen Schicht 19 durch diese Durchbrüche 26 hindurch bis zur Außenseite erstrecken kann. Bei dieser Ausführungsform ist bevorzugt vorgesehen, dass die zumindest eine Schicht 19 aus Polypropylen besteht.

Ein Mehrschichtaufbaus 11 gemäß den Figuren 6a und 6b sieht vor, dass eine oder beide Faserverbundschichten 18 sich nur im Bereich des Datenblatts 14 erstrecken, so dass die Lasche 16 nur durch die zumindest eine Schicht 19 oder durch die zumindest eine Schicht 19 und zumindest eine Faserverbundschicht 18 gebildet wird, welche in die zumindest eine Schicht 19 einpenetriert ist. Es können beispielsweise auch mehrere Schichten 19, 24 die Lasche bilden, welche eine Gesamtdicke bis zu 300 µm aufweisen können.

In Figur 7 ist ein alternativer Mehrschichtaufbaus 11 zu den Figuren 6a und 6a dargestellt. Bei dieser Ausführungsform ist vorgesehen, dass die zumindest eine Schicht 19 sich nur im Bereich des Datenblatts 14 erstreckt und die Faserverbundschichten 18 sich über den Bereich des Datenblatts 14 hinaus erstrecken und die Lasche 16 bilden. Die beidseitig zur Schicht 19 zugeordneten Faserverbundschichten 18 penetrieren in die Schicht 19 ein, welche sich nur entlang des Datenblatts 14 erstreckt, so dass eine Lasche 16 ausschließlich aus zwei miteinander verbundenen Faserverbundschichten 18 gebildet ist. Die mehrschichtige Aufbauten der Figuren 6a, 6b und 7 sind nützlich, um die Ausführungsform von Figur 8 zu verstehen.

In Figur 8 ist eine beispielhafte Ausgestaltung eines Einlageblattes 30 dargestellt, welches ausgehend von einem Mehrschichtaufbau 11 gemäß den Figuren 6a und 6b gebildet wird. Dabei werden eine oder beide Außenseiten der Faserverbundschichten 18 mit einem Druckbild 35 versehen, wobei auf der einen Seite des Mehrschichtaufbaus 11, der zur Aufnahme von zumindest einer weiteren Schicht 33 vorgesehen ist, beispielsweise eine Titelseite 15 gebildet werden kann und gegenüber liegend eine Datenseite 17. Darauf folgend wird auf der einen Seite des Mehrschichtaufbaus 11, auf welcher das Druckbild 35 für die Titelseite 15 aufgebracht ist, eine weitere Schicht 33 mit zumindest einem Sicherheitsmerkmal über eine Klebemittelschicht 31 befestigt, wobei die Klebemittelschicht 31 Bereiche mit Trennmittel 34 zur Bildung von Sollbruchstellen aufweisen kann. Ergänzend kann an der Außenseite der weiteren Schicht 33 wiederum eine strukturierte Lackschicht 37 aufgebracht werden. Gegenüber liegend kann das Druckbild 35 auf die Faserverbundschicht 18 durch eine Schutzfolie 36 gesichert werden.

### Bezugszahlenliste

11. Mehrschichtaufbau
12. Einlageblatt
14. Datenblatt
15. Titelseite
16. Lasche
17. Datenseite
18. Faserverbundschicht
19. Schicht
21. Penetrierzone
22. Zone
24. Weitere Schicht
26. Durchbruch
30. Einlegeblatt
31. Klebemittelschicht
33. Weitere Schicht
34. Trennmittel
35. Schutzschicht
36. Schutzfolie
37. Strukturierte Lackschicht

## Patentansprüche

1. Mehrschichtaufbau für ein Einlageblatt zum Einbinden in ein vorzugsweise buchartiges Sicherheits- und/oder Wertdokument, mit einem Bereich zur Bildung eines Datenblatts (14) und einem Bereich zur Bildung einer Lasche (16) mit zumindest einer Faserverbundschicht (18) und zumindest einer Schicht (19, 24) aus einem thermoplastischen Polymer, die auf zumindest einer Seite der Faserverbundschicht (18) aufgebracht und im Überdeckungsbereich bezogen auf die Dicke der Schicht (19, 24) zumindest teilweise in die Faserverbundschicht (18) einpenetriert ist,
**dadurch gekennzeichnet,**
**dass** auf die zumindest eine Seite der Faserverbundschicht (18) ein Sicherheitsmerkmal aufgebracht ist, in welches die zumindest eine Schicht (19, 24) unter Einbindung des Sicherheitsmerkmals einpenetriert ist, wobei die zumindest eine, einseitig aufgebrachte Schicht (19, 24) in die Faserschicht (18) zu wenigstens 70 % einpenetriert ist.

2. Mehrschichtaufbau nach Anspruch 1, **dadurch gekennzeichnet, dass** die zur zumindest einen Schicht (19) weisende Seite der Faserverbundschicht (18) durch die zumindest eine Schicht (19, 24) vollständig überdeckt ist.

3. Mehrschichtaufbau nach Anspruch 1, **dadurch gekennzeichnet, dass** zur Bildung einer Datenseite (14) auf die Faserverbundschicht (18) zumindest ein Sicherheitsmerkmal (35), insbesondere ein Druckbild (35), aufgebracht ist und eine vollflächige Überdeckung der Faserverbundschicht (18) durch die zumindest eine Schicht (19, 24) vorgesehen ist und die an die Datenseite (14) angebundene Lasche (16) durch die Faserverbundschicht (18), die zumindest eine Schicht (19, 24) oder die Faserverbundschicht (18) und die zumindest eine Schicht (19, 24) gebildet ist.

4. Mehrschichtaufbau nach Anspruch 1, **dadurch gekennzeichnet, dass** in die Faserverbundschicht (18) beidseitig zumindest eine Schicht (19, 24) einpenetriert ist und die von jeder Seite aus zumindest eine einpenetrierte Schicht (19, 24) sich innerhalb der Faserverbundschicht (18) stoffschlüssig verbinden oder dass in die zumindest eine Schicht (19, 24) jeweils von deren Außenseite die eine Faserverbundschicht (18) einpenetriert ist.

5. Mehrschichtaufbau nach Anspruch 1, **dadurch gekennzeichnet, dass** die Faserverbundschicht (18) aus einer zufälligen oder ungeordneten Anordnung von Fasern, insbesondere einem flächigen Faserbündel, einem Fasernetzwerk oder einer flächigen Faseranordnung aus Natur- und/oder Kunstfasern oder Viskose, vorzugsweise einem Vlies, einem Filz, einem Wirrfasersubstrat, einem Gelege oder einem Papier, besteht und insbesondere die Fasern der Faserverbundschicht (18) durch Verschlingungen, Verweben, Vernadeln fixiert und zur Verfestigung mit einem Binde- oder Lösemittel fixiert sind und vorzugsweise die Fasern der Faserverbundschicht (18) aus Polyamid, Polypropylen, Polyethylenterephthalat, PET-G oder aus einer Mischung mit Naturfasern, insbesondere auf Basis der Cellulose oder Baumwolle, oder aus Baumwolle bestehen.

6. Mehrschichtaufbau nach Anspruch 1, **dadurch gekennzeichnet, dass** die zumindest eine Schicht (19, 24) aus einem thermoplastischen Polymer, insbesondere aus thermoplastischem Polyurethan, einer Mischung mit überwiegenden Bestandteilen aus thermoplastischem Polyurethan oder Thermoplasten, vorzugsweise Polypropylen, Polyester, Polyethylen, Polyamid, Polyvinylchlorid, Polyethylenterephthalat, PET-G, Polycarbonat, ABS oder einer Mischung davon, besteht.

7. Mehrschichtaufbau nach Anspruch 1, **dadurch gekennzeichnet, dass** die Faserverbundschicht (18) zur Fixierung der Fasern ein Bindemittel aufweist, vorzugsweise Polyvinylacetat, Vinylacetat-Copolymer, PUR, Polyacrylat, Polystyrol, Methylcellulose, Acrylnitril oder Mischungen daraus.

8. Verfahren zur Herstellung eines Mehrschichtaufbaus (11) für ein Einlageblatt (30) eines vorzugsweise buchartigen Sicherheits- und/oder Wertdokumentes,
- bei dem eine Faserverbundschicht (18) und zumindest eine Schicht (19, 24) aus einem thermoplastischen Polymer auf zumindest einer Seite der Faserverbundschicht (18) positioniert wird,
- bei dem die zumindest eine Schicht (19, 24) aus thermoplastischem Polymer erweicht wird und
- bei dem die zumindest eine erweichte Schicht (19, 24) im Überlappungsbereich zur Faserverbundschicht (18) in die Faserverbundschicht (18) bezogen auf die Dicke der zumindest einen Schicht (19, 24) zumindest teilweise zur Bildung einer Penetrierzone (21) einpenetriert wird,
**dadurch gekennzeichnet,**
- **dass** auf die zumindest eine Seite der Faserverbundschicht (18) ein Sicherheitsmerkmal aufgebracht wird, in welches die zumindest eine Schicht (19, 24) unter Einbindung des Sicherheitsmerkmals einpenetriert wird, wobei die zumindest eine, einseitig aufgebrachte Schicht (19, 24) zu wenigstens 70 % in die Faserverbundschicht (18) einpenetriert wird.

9. Verfahren nach Anspruch 8, **dadurch gekennzeichnet, dass** beidseitig zur Faserverbundschicht (18) zumindest eine Schicht (19, 24) einpenetriert wird und die Schichten (19, 24) innerhalb der Faserverbundschicht (18) stoffschlüssig miteinander verbunden werden und vorzugsweise auf einer oder beiden Seiten der Faserverbundschicht (18) zumindest ein Sicherheitsmerkmal, insbesondere Druckbild (35), aufgedruckt und anschließend die zumindest eine Schicht (19, 24) auf der zumindest einen Seite der Faserverbundschicht (18) einpenetriert wird.

10. Verfahren nach Anspruch 8, **dadurch gekennzeichnet, dass** die Faserverbundschicht (18) vor dem Einpenetrieren der zumindest einen Schicht (19) vorbehandelt und ein Strich, insbesondere eine mineralische Beschichtung, aufgebracht wird.

11. Einlageblatt für ein vorzugsweise buchartiges Wert- oder Sicherheitsdokument mit einem Datenblatt (14) und einer Lasche (16), **dadurch gekennzeichnet, dass** das Einlageblatt (30) zumindest einen Mehrschichtaufbau (11) nach einem der Ansprüche 1 bis 7 umfasst und eine Oberfläche der Faserverbundschicht (18) frei von einer einpenetrierten Schicht (19, 24) aus thermoplastischem Polymer ist und diese Oberfläche der Faserverbundschicht (18) mit Informationen und/oder zumindest einem Sicherheitsmerkmal bedruckbar ist.

12. Einlageblatt nach Anspruch 11, **dadurch gekennzeichnet, dass** auf die bedruckte Faserverbundschicht (18) zumindest eine Schutzfolie (36) aufgebracht wird.

13. Einlageblatt nach Anspruch 11, **dadurch gekennzeichnet, dass** auf die zumindest eine Schicht oder Schichten (19, 24), welche ein- oder beidseitig in die Faserverbundschicht (18) einpenetriert ist oder sind oder auf eine der beiden Faserverbundschichten (18), welche von jeder Seite zumindest teilweise in die zumindest eine Schicht (19, 24) einpenetriert sind, zumindest eine weitere Schicht (33) mit einer Klebemittelschicht (31) verbunden ist, wobei in der Klebemittelschicht (31) klebemittelfreie Bereiche und/oder Bereiche mit Trennmittel (34) als Sollbruchstelle vorgesehen sind.

14. Einlageblatt nach Anspruch 11, **dadurch gekennzeichnet, dass** auf der zumindest einen Schicht (19, 24), welche in die Faserverbundschicht (18) einpenetriert ist, zumindest eine weitere Schicht (33) mit einem Sicherheitsmerkmal vorzugsweise ein holographisches Sicherheitsmerkmal mit einer Klebeschicht verbunden ist, wobei die Klebemittelschicht (31) auf eine strukturierte Lackschicht (37) auf der zumindest einen Schicht (19) aufgebracht ist.

## Claims

1. Multilayer structure for an insert leaf for binding into a preferably book-like security and/or valuable document, having a region for forming a data sheet (14) and a region for forming a tap (16) with at least one fiber composite layer (18) and at least one layer (19, 24) of a thermoplastic polymer which is applied to at least one side of the fiber composite layer (18) and is at least partially penetrated into the fiber composite layer (18) in the overlap region relative to the thickness of the layer (19, 24),
**characterized in**
**that** a security feature is applied to at least one side of the fiber composite layer (18), into which security feature the at least one layer (19, 24) is penetrated while incorporating the security feature, at least 70% of the at least one layer (19, 24) applied on one side being penetrated into the fiber layer (18).

2. Multilayer structure according to claim 1, **characterized in that** the side of the fibre composite layer (18) facing the at least one layer (19) is completely covered by the at least one layer (19, 24) .

3. Multilayer structure according to claim 1, **characterized in that** at least one security feature (35), in particular a printed image (35), is applied to the fibre composite layer (18) to form a data side (14), and a full-surface covering of the fibre composite layer (18) by the at least one layer (19, 24) is provided and the tab (16) connected to the data side (14) is formed by the fiber composite layer (18), the at least one layer (19, 24) or the fiber composite layer (18) and the at least one layer (19, 24) .

4. Multilayer structure according to claim 1, **characterized in that** at least one layer (19, 24) is penetrated into the fibre composite layer (18) on both sides and the at least one penetrated layer (19, 24) from each side is bonded within the fibre composite layer (18), or **in that** the one fibre composite layer (18) is penetrated into the at least one layer (19, 24) from the outside of the latter in each case.

5. Multilayer structure according to claim 1, **characterized in that** the fiber composite layer (18) consists of a random or disordered arrangement of fibers, in particular a flat fiber bundle, a fiber network or a flat fiber arrangement of natural and/or synthetic fibers or viscose, preferably a nonwoven, a felt, a random fiber substrate, a scrim or a paper, and in particular the fibers of the fiber composite layer (18) are fixed by interlacing, interweaving, needling and are fixed with a binder or solvent for bonding and preferably the fibers of the fiber composite layer (18) consist of polyamide, polypropylene, polyethylene terephthalate, PET-G or of a mixture with natural fibers, in particular on the basis of cellulose or cotton, or of cotton.

6. Multilayer structure according to claim 1, **characterized in that** the at least one layer (19, 24) consists of a thermoplastic polymer, in particular of thermoplastic polyurethane, a mixture with predominant components of thermoplastic polyurethane or thermoplastics, preferably polypropylene, polyester, polyethylene, polyamide, polyvinyl chloride, polyethylene terephthalate, PET-G, polycarbonate, ABS or a mixture thereof.

7. Multilayer structure according to claim 1, **characterized in that** the fibre composite layer (18) has a binder for fixing the fibres, preferably polyvinyl acetate, vinyl acetate copolymer, PUR, polyacrylate, polystyrene, methyl cellulose, acrylonitrile or mixtures thereof.

8. Method for producing a multilayer structure (11) for an insert leaf (30) of a preferably book-like security and/or valuable document,
- in which a fiber composite layer (18) and at least one layer (19, 24) of a thermoplastic polymer are positioned on at least one side of the fiber composite layer (18),
- in which the at least one layer (19, 24) of thermoplastic polymer is softened, and
- in which the at least one softened layer (19, 24) is at least partially penetrated into the fiber composite layer (18) in the overlap region with respect to the fiber composite layer (18), relative to the thickness of the at least one layer (19, 24), to form a penetration zone (21),
**characterized in**
- **in that** a security feature is applied to at least one side of the fiber composite layer (18), into which security feature the at least one layer (19, 24) is penetrated while incorporating the security feature, wherein
at least 70% of the at least one layer (19, 24) applied on one side is penetrated into the fiber composite layer (18).

9. Method according to claim 8, **characterized in that** at least one layer (19, 24) is penetrated on both sides of the fibre composite layer (18) and the layers (19, 24) are bonded to one another within the fibre composite layer (18) and preferably at least one security feature, in particular a printed image (35), is printed on one or both sides of the fibre composite layer (18) and then the at least one layer (19, 24) is penetrated on the at least one side of the fibre composite layer (18).

10. Method according to claim 8, **characterized in that** the fibre composite layer (18) is pretreated before the at least one layer (19) is penetrated and a coating, in particular a mineral coating, is applied.

11. Insert leaf for a preferably book-like value or security document with a data sheet (14) and a tap (16), **characterized in that** the insert leaf (30) comprises at least one multilayer structure (11) according to one of claims 1 to 7 and a surface of the fibre composite layer (18) is free of a penetrated layer (19, 24) of thermoplastic polymer and this surface of the fibre composite layer (18) can be printed with information and/or at least one security feature.

12. Insert leaf according to claim 11, **characterized in that** at least one protective film (36) is applied to the printed fibre composite layer (18).

13. Insert leaf according to claim 11, **characterized in that** on the at least one layer or layers (19, 24) which is or are penetrated on one or both sides into the fibre composite layer (18) or on one of the two fibre composite layers (18), which are at least partially penetrated from each side into the at least one layer (19, 24), at least one further layer (33) is bonded to an adhesive layer (31), with areas free of adhesive and/or areas with release agent (34) being provided in the adhesive layer (31) as a predetermined breaking point.

14. Insert leaf according to claim 11, **characterized in that** on the at least one layer (19, 24), which is penetrated into the fibre composite layer (18), at least one further layer (33) with a security feature, preferably a holographic security feature, is bonded to an adhesive layer, the adhesive layer (31) being applied to a structured lacquer layer (37) on the at least one layer (19).

## Revendications

1. Structure multicouche pour une feuille d'insertion destinée à être reliée dans un document de sécurité et/ou de valeur, de préférence en forme de livre, avec une zone pour former une feuille de données (14) et une zone pour former une languette (16) avec au moins une couche composite en fibres (18) et au moins une couche (19, 24) en un polymère thermoplastique, qui est appliquée sur au moins une face de la couche composite en fibres (18) et est pénétrée au moins partiellement dans la couche composite en fibres (18) dans la zone de recouvrement par rapport à l'épaisseur de la couche (19, 24),
**caractérisé en ce**
**qu'**une caractéristique de sécurité est appliquée sur l'au moins une face de la couche de fibres composites (18), dans laquelle l'au moins une couche (19, 24) est pénétrée en intégrant la caractéristique de sécurité, l'au moins une couche (19, 24) appliquée sur une face étant pénétrée à au moins 70 % dans la couche de fibres (18).

2. Structure multicouche selon la revendication 1, **caractérisée en ce que** le côté de la couche de fibres composites (18) orienté vers la au moins une couche (19) est entièrement recouvert par la au moins une couche (19, 24).

3. Structure multicouche selon la revendication 1, **caractérisée en ce que**, pour former une face de données (14), au moins une caractéristique de sécurité (35), en particulier une image imprimée (35), est appliquée sur la couche de fibres composites (18) et un recouvrement sur toute la surface de la couche de fibres composites (18) par la au moins une couche (19, 24) est prévu et la languette (16) reliée à la page de données (14) est formée par la couche de fibres composites (18), la au moins une couche (19, 24) ou la couche de fibres composites (18) et la au moins une couche (19, 24).

4. Structure multicouche selon la revendication 1, **caractérisée en ce qu'**au moins une couche (19, 24) est pénétrée des deux côtés dans la couche de fibres composites (18) et **en ce que** les au moins une couche (19, 24) pénétrée de chaque côté se lient par liaison de matière à l'intérieur de la couche de fibres composites (18) ou **en ce qu'**une couche de fibres composites (18) est pénétrée dans la au moins une couche (19, 24) à partir de son côté extérieur.

5. Structure multicouche selon la revendication 1, **caractérisée en ce que** la couche de fibres composites (18) est constituée d'un agencement aléatoire ou désordonné de fibres, en particulier d'un faisceau de fibres plat, d'un réseau de fibres ou d'un agencement de fibres plat en fibres naturelles et/ou synthétiques ou en viscose, de préférence d'un non-tissé, d'un feutre, d'un substrat de fibres emmêlées, d'un tissu ou d'un papier, et en particulier les fibres de la couche composite de fibres (18) sont fixées par entrelacement, tissage, aiguilletage et sont fixées pour la consolidation avec un liant ou un solvant et de préférence les fibres de la couche composite de fibres (18) sont en polyamide, polypropylène, polyéthylène téréphtalate, PET-G ou en un mélange avec des fibres naturelles, en particulier à base de cellulose ou de coton, ou en coton.

6. Structure multicouche selon la revendication 1, **caractérisée en ce que** la au moins une couche (19, 24) est constituée d'un polymère thermoplastique, en particulier de polyuréthane thermoplastique, d'un mélange avec des composants prédominants de polyuréthane thermoplastique ou de thermoplastiques, de préférence de polypropylène, de polyester, de polyéthylène, de polyamide, de chlorure de polyvinyle, de polyéthylène téréphtalate, de PET-G, de polycarbonate, d'ABS ou d'un mélange de ceux-ci.

7. Structure multicouche selon la revendication 1, **caractérisée en ce que** la couche composite de fibres (18) présente un liant pour fixer les fibres, de préférence du polyacétate de vinyle, un copolymère d'acétate de vinyle, du PUR, du polyacrylate, du polystyrène, de la méthylcellulose, de l'acrylonitrile ou des mélanges de ceux-ci.

8. Procédé de fabrication d'une structure multicouche (11) pour une feuille d'insertion (30) d'un document de sécurité et/ou de valeur, de préférence en forme de livre,
- dans lequel une couche composite fibreuse (18) et au moins une couche (19, 24) d'un polymère thermoplastique sont positionnées sur au moins un côté de la couche composite fibreuse (18),
- dans lequel ladite au moins une couche (19, 24) de polymère thermoplastique est ramollie, et
- dans lequel la au moins une couche ramollie (19, 24) est pénétrée au moins partiellement dans la couche de fibres composites (18) dans la zone de chevauchement avec la couche de fibres composites (18) par rapport à l'épaisseur de la au moins une couche (19, 24) pour former une zone de pénétration (21),
**caractérisé en ce**
- **qu'**une caractéristique de sécurité est appliquée sur l'au moins un côté de la couche composite de fibres (18), dans laquelle l'au moins une couche (19, 24) est pénétrée en intégrant la caractéristique de sécurité, où
la au moins une couche (19, 24) appliquée d'un côté est pénétrée à au moins 70 % dans la couche composite de fibres (18).

9. Procédé selon la revendication 8, **caractérisé en ce qu'**au moins une couche (19, 24) est pénétrée sur les deux côtés de la couche de fibres composites (18) et les couches (19, 24) sont reliées entre elles à l'intérieur de la couche de fibres composites (18) par liaison de matière et, de préférence, au moins une caractéristique de sécurité, en particulier une image imprimée (35), est imprimée sur un côté ou sur les deux côtés de la couche de fibres composites (18) et ensuite la au moins une couche (19, 24) est pénétrée sur le au moins un côté de la couche de fibres composites (18).

10. Procédé selon la revendication 8, **caractérisé en ce que** la couche composite fibreuse (18) est prétraitée et un trait, en particulier un revêtement minéral, est appliqué avant la pénétration de ladite au moins une couche (19).

11. Feuille d'insertion pour un document de valeur ou de sécurité, de préférence en forme de livre, avec une feuille de données (14) et une languette (16), **caractérisée en ce que** la feuille d'insertion (30) comprend au moins une structure multicouche (11) selon l'une des revendications 1 à 7 et une surface de la couche composite fibreuse (18) est exempte d'une couche pénétrée (19, 24) en polymère thermoplastique et cette surface de la couche composite fibreuse (18) peut être imprimée avec des informations et/ou au moins une caractéristique de sécurité.

12. Feuille d'insertion selon la revendication 11, **caractérisée en ce qu'**au moins un film de protection (36) est appliqué sur la couche composite fibreuse imprimée (18).

13. Feuille d'insertion selon la revendication 11, **caractérisée en ce que** sur l'au moins une couche ou les couches (19, 24) qui est ou sont pénétrée(s) d'un côté ou des deux côtés dans la couche de fibres composites (18) ou sur l'une des deux couches de fibres composites (18), qui sont pénétrées au moins partiellement de chaque côté dans la au moins une couche (19, 24), au moins une autre couche (33) est reliée à une couche d'agent adhésif (31), des zones sans agent adhésif et/ou des zones avec un agent de séparation (34) étant prévues dans la couche d'agent adhésif (31) comme point destiné à la rupture.

14. Feuille d'insertion selon la revendication 11, **caractérisée en ce que** sur la au moins une couche (19, 24) qui est pénétrée dans la couche de composite fibreux (18), au moins une autre couche (33) avec une caractéristique de sécurité, de préférence une caractéristique de sécurité holographique, est reliée à une couche adhésive, la couche d'agent adhésif (31) étant appliquée sur une couche de vernis structurée (37) sur la au moins une couche (19).
